# EUROPÄISCHE PATENTSCHRIFT

(11) **EP 2 470 836 B1**
(45) Veröffentlichungstag und Bekanntmachung des Hinweises auf die Patenterteilung: **12.08.2015**
(21) Anmeldenummer: 10757404.8
(22) Anmeldetag: 26.08.2010
(51) Int. Cl.: C02F 1/72, C02F 1/02, C02F 1/78, C02F 1/34, C02F 9/00, C02F 1/32, C02F 1/44, F24D 17/00

(54) **WASSERAUFBEREITUNGSSYSTEM**
WATER TREATMENT SYSTEM
SYSTÈME DE TRAITEMENT DE L'EAU

(30) Priorität: 26.08.2009 DE 202009011570 U; 05.10.2009 DE 102009048310
(43) Veröffentlichungstag der Anmeldung: 04.07.2012
(73) Patentinhaber: Peter, Koch, 7423 Pinkafeld (AT)
(72) Erfinder: Peter, Koch, 7423 Pinkafeld (AT)
(74) Vertreter: Keschmann, Marc
(86) Internationale Anmeldenummer: PCT/EP2010/062487
(87) Internationale Veröffentlichungsnummer: WO 2011/023767

(56) Entgegenhaltungen:
- DE-A1- 10 253 102
- DE-A1-102004 041 987
- US-A- 5 494 585
- US-A1- 2006 081 541
- US-B1- 6 221 260
- "Technische Regeln für Trinkwasser-Installationen - Planung", DIN EN 806-2,, 1. Januar 2005 (2005-01-01), Seiten 1-54, XP009154816,

## Beschreibung

Die Erfindung betrifft ein Wasseraufbereitungssystem. Ein gattungsgemäßes Wasseraufbereitungssystem ist beispielsweise aus der WO 2008/037351 bekannt, die auf den Anmelder zurückgeht.

Das bekannte Wasseraufbereitungssystem umfasst einen Zirkulationskreislauf, in dem ein Warmwasserspeicher und ein Kavitator angeordnet sind. Der Kavitator ist. dabei dem Warmwasserspeicher in Strömungsrichtung nachgeordnet. Der Warmwasserspeicher umfasst ferner eine Heizung, die das im Zirkulationskreislauf umlaufende Wasser erwärmt. Zwischen dem Warmwasserspeicher und dem Kavitator ist in Strömungsrichtung ein Kaltwasserzulauf angeordnet. Das Kaltwasser wird dem Zirkulationskreislauf also vor dem Kavitator zugeführt. Im Kavitator erfolgt eine Reinigung des zugeführten Kaltwassers sowie des im Zirkulationskreislauf zirkulierenden Warmwassers, wobei vor allem biologische Verunreinigungen, die insbesondere Legionellenwachstum fördern, reduziert werden. Das gereinigte Kaltwasser-/Warmwassergemisch wird dem Warmwasserspeicher zugeführt, wobei der Kaltwasseranteil im Warmwasserspeicher durch die Heizung erwärmt wird.

Der Warmwasserspeicher bei den bekannten Wasseraufbereitungssystemen ist ferner mit einer Warmwasserzirkulation gekoppelt, die den Warmwasserspeicher mit Entnahmestellen verbindet. Wenn an den Entnahmestellen Warmwasser aus der Warmwasserzirkulation entnommen wird, wird die entsprechende Menge an Kaltwasser dem Zirkulationskreislauf nachgeführt, im Kavitator gereinigt und dem Warmwasserspeicher zugeleitet. Der Warmwasserspeicher bildet dabei einen Puffer, der wirksam wird, wenn die Menge des entnommenen Warmwassers die nachgeführte Kaltwassermenge übersteigt. In diesen Fällen ergibt sich allerdings die Problematik, dass das nachgeführte Kaltwasser im Zirkulationskreislauf eine geringe Verweildauer aufweist, wodurch die Anzahl der Kavitationsbehandlungen im Zirkulationskreislauf reduziert wird. Wenn also der Warmwasserspeicher durch eine erhöhte Entnahmemenge des Warmwassers leergelaufen ist, wird das nachgeführte Kaltwasser nach der Kavitationsbehandlung und dem anschließenden Erwärmen durch die Heizung des Warmwasserspeichers direkt der Entnahmestelle zugeführt. Eine ausreichend lange Verweildauer des Kaltwassers im Zirkulationskreislauf ist also nicht gegeben, so dass keine sichere Entkeimung bzw. ausreichende Reduktion von biologischen Verunreinigungen gewährleistet werden kann. Diese Problematik trifft auch dann teilweise zu, wenn der Warmwasserspeicher gefüllt ist und entsprechend eine Pufferfunktion wahrnimmt. Konkret kann bei dem bekannten Wasseraufbereitungssystem auch bei gefülltem Warmwasserspeicher nicht ausgeschlossen werden, dass ein Kaltwasseranteil, der dem Warmwasserspeicher über den Kavitator zugeführt wird, sofort in die Warmwasserzirkulation geleitet wird. Ähnliche Wasseraufbereitungssysteme beschreiben US 5,494,585 A und US 6,221,260 B1.

Die Aufgabe der Erfindung besteht darin, das bekannte Wasseraufbereitungssystem derart weiterzuentwickeln, dass die Reinigungswirkung erhöht und der konstruktive Aufwand verringert wird.

Erfindungsgemäß wird diese Aufgabe durch den Gegenstand des Anspruchs 1 gelöst.

Die Erfindung beruht auf dem Gedanken, ein Wasseraufbereitungssystem mit einem Kaltwasserzulauf anzugeben, der in einen Zirkulationskreislauf mündet, wobei der Zirkulationskreislauf wenigstens einen Erhitzer und wenigstens eine Kavitationseinheit umfasst. Dabei ist der Kaltwasserzulauf dem Erhitzer in Strömungsrichtung vorgeordnet und weist wenigstens eine Ultrafiltrationseinheit auf.

Im Unterschied zu dem bekannten Wasseraufbereitungssystem ist bei der Erfindung vorgesehen, den Kaltwasserzulauf direkt vor dem Erhitzer mit dem Zirkulationskreislauf zu verbinden, so dass das zugeführte Kaltwasser unmittelbar in Warmwasser umgewandelt wird. Um die Eintragung von biologischen Verunreinigungen in den Zirkulationskreislauf zu verringern, ist die Ultrafiltrationseinheit vorgesehen, die im Kaltwasserzulauf angeordnet ist. Durch die Ultrafiltrationseinheit werden biologische Verunreinigungen bereits vor der Zufuhr des Kaltwassers in den Zirkulationskreislauf zurückgehalten. Die Effizienz der Wasseraufbereitung wird auf diese Weise erhöht. Überdies ermöglicht die vorgeschaltete Ultrafiltration des Kaltwassers die Verwendung von kleineren Pumpen im Zirkulationskreislauf, da der Anteil an biologischen Verunreinigungen, die in den Zirkulationskreislauf eingeleitet werden, reduziert wird und somit eine reduzierte Anzahl an Kavitationsbehandlungen in der Kavitationseinheit für eine effiziente Reinigung ausreicht. Das bedeutet, dass durch die vorgeschaltete Ultrafiltrationseinheit die Durchflussrate im Zirkulationskreislauf reduzierbar ist.

Im Allgemeinen bildet das erfindungsgemäße Wasseraufbereitungssystem also eine doppelte Barriere für biologische Verunreinigungen, insbesondere für Legionellen. Die Qualität des aufbereiteten Trinkwassers, wird durch die erfindungsgemäße Weiterentwicklung effizient gesteigert.

Ein weiterer Vorteil der vorgeschalteten Ultrafiltrationseinheit betrifft das Energieeinsparungspotential des erfindungsgemäßen Wasseraufbereitungssystems. Zusätzlich zur Kavitationsbehandlung erfolgt eine thermische Desinfektion des Warmwassers im Zirkulationskreislauf. Dabei kann die Behandlungszeit durch Wahl der Temperatur bestimmt werden. Beispielsweise ist es bekannt, dass die thermische Zerstörung von Legionellen bei einer Temperatur von 60 °C wenigstens 20 min Behandlungsdauer benötigt. Bei nur 55 °C erhöht sich die Behandlungsdauer auf das Doppelte bis Dreifache (ca. 1 Stunde).

Beim erfindungsgemäßen Wasseraufbereitungssystem wird allerdings durch die Ultrafiltrationseinheit bereits der Eintrag von Legionellen in den Warmwasser führenden Zirkulationskreislauf erheblich reduziert, so dass auch bei geringerer Warmwassertemperatur eine schnelle thermische Desinfektion erfolgt. Die Ultrafiltrationseinheit verhindert oder reduziert zumindest den Eintrag von biologischen Verunreinigungen, d.h. Bakterien und dergleichen, bzw. tötet diese ab, so dass auch Totleitungen im Wasserkreislauf, die üblicherweise einen Verseuchungsherd darstellen, im Wesentlichen frei von Infektionen gehalten werden. Eine rein thermische Desinfektion, wie aus dem Stand der Technik bekannt, stößt hier an Grenzen.

Des Weiteren hat sich überraschenderweise gezeigt, dass durch das erfindungsgemäße Wasseraufbereitungssystem Bakterien, insbesondere Legionellen, in Totleitungen die Nährstoffe entzogen werden, so dass die Bakterien in der Totleitung nach einer gewissen Zeit absterben. Hierdurch wird die Anzahl möglicher Verseuchungsherde reduziert. Die in Experimenten festgestellte Zeit bis zum Absterben von Legionellen in Totleitungen auf diese Weise beträgt ca. 1-3 Jahre.

Zusätzlich wird eine Kavitationsbehandlung in der Kavitationseinheit durchgeführt, die die Gesamtbehandlungsdauer zur Entkeimung weiter reduziert. Das bedeutet, dass das erfindungsgemäße Wasseraufbereitungssystem eine erhöhte Energieeffizienz aufweist, da die Temperaturdifferenz zwischen Warmwasser und Kaltwasser reduziert werden kann.

Durch die entsprechend geringere Warmwassertemperatur wird zusätzlich dem Ausfall und der Ablagerung von Kalkbestandteilen entgegengewirkt. Somit kann auf eine Enthärtung des Wassers verzichtet werden. Überdies kann auf diese Weise auf einen Verbrühschutz verzichtet werden. Ferner ermöglichen die geringeren Warmwassertemperaturen eine Reduktion von Abstrahlverlusten, wodurch die Erwärmung von benachbarten Kaltwasserleitungen reduziert und somit das Risiko eines zusätzlichen Legionellenbefalls weiter minimiert wird.

Das erfindungsgemäße Wasseraufbereitungssystem kann zum Legionellenschutz insbesondere auch bei Warmwassertemperaturen bis 35 °C wirksam eingesetzt werden. Hierdurch wird weniger Energie zur Erwärmung des Warmwassers benötigt. Die technischen Anforderungen an das Wasseraufbereitungssystem können aufgrund der geringeren Warmwassertemperatur reduziert werden. Durch eine erniedrigte Warmwassertemperatur kann u.a. der Isolierungsaufwand für das Wasseraufbereitungssystem verringert werden. Ebenfalls können die benötigten Anschlusswerte der Warmwasserversorger erheblich gesenkt werden. Der für die Kavitationsbehandlung hierbei benötigte Energieaufwand hängt von der Warmwassertemperatur ab.

In der Kavitationseinheit werden lokal begrenzt Temperaturen von bis zu 10.000 °C und Druckunterschiede zwischen - 1 bar bis + 5.000 bar erreicht. Hierdurch werden Bakterien, insbesondere Legionellen, weitgehend unabhängig von der Temperatur des durchlaufenden Warmwassers abgetötet. Die für die Kavitationsbehandlung benötigte Energie geht weitgehend in die Temperatur des Warmwassers erhöhende Wärme über. Die Energie für die Kavitationsbehandlung verlässt somit das Wasseraufbereitungssystem weitgehend nicht.

Die Ultrafiltrationseinheit ist insbesondere als Doppelfilter ausgeführt. Hierdurch wird eine verbesserte Wirtschaftlichkeit des Wasseraufbereitungssystems erreicht. Die Ultrafiltrationseinheit wird vorzugsweise automatisch gereinigt. Hierdurch sinken der Aufwand und die Kosten für die Wartung des Wasseraufbereitungssystems.

Bei dem erfindungsgemäßen Wasseraufbereitungssystem umfasst der Kaltwasserzulauf eine Trinkwasserabzweigung, die den Kaltwasserzulauf mit einer Entnahmestelle fluidverbindet. Die Trinkwasserabzweigung ist der Ultrafiltrationseinheit nachgeordnet sein. Das bedeutet, dass das gesamte Kaltwasser in der Ultrafiltrationseinheit filtriert wird. Auf diese Weise wird auch das in die Trinkwasserabzweigung abgeleitete Kaltwasser, das direkt zur Entnahmestelle geleitet wird, zunächst in der Ultrafiltrationseinheit entkeimt.

Erfindungsgemäß weist der Zirkulationskreislauf einen Vorlauf, der vom Erhitzer zur Entnahmestelle führt und einen Rücklauf auf, der von der Entnahmestelle zum Erhitzer führt. Der Vorlauf und der Rücklauf bilden also gemeinsam den Zirkulationskreislauf, wobei zumindest im Vorlauf durchgehend Warmwasser geführt ist. Der Rücklauf kann abschnittsweise Warmwasser und/oder ein Kaltwasser-/Warmwassergemisch führen.

Der Zirkulationskreislauf umfasst vorzugsweise wenigstens einen Warmwasserspeicher, der mit dem Rücklauf fluidverbunden ist. Der Warmwasserspeicher ist zusätzlich mit dem Vorlauf verbunden. Konkret umfasst der Warmwasserspeicher eine Entnahmeleitung, die mit dem Vorlauf fluidverbunden ist. Der Warmwasserspeicher bzw. die Entnahmeleitung des Warmwasserspeichers ist also der Entnahmestelle vorgeordnet. Somit bildet der Warmwasserspeicher einen Puffer, wodurch ausreichend

Warmwasser bereitsteht, um an der Entnahmestelle entnommen zu werden, selbst wenn die Menge des in den Zirkulationskreislauf geführten Kaltwassers die Menge des entnommenen Warmwassers zeitweise unterschreitet.

Vorteilhafterweise ist die Erfindung sowohl bei Speichersystemen, als auche bei Durch laufsystemen einsetzbar. Konkret kann das erfindungsgemäße Wasseraufbereitungssystem also mit oder ohne einen Warmwasserspeicher eingesetzt werden. Bei Systemen ohne Warmwasserspeicher, die lediglich einen Durchlauferhitzer umfassen, ist in Abhängigkeit der entnommenen Warmwassermenge an den Entnahmestellen eine reduzierte Anzahl von Kavitationsbehandlungen möglich. Durch die vorgeschaltete Ultrafiltrationseinheit wird dennoch eine ausreichend hohe Trinkwasserqualität erreicht, da der Eintrag von Keimen, insbesondere Legionellen, verhindert oder zumindest verringert wird. Dasselbe gilt für Speichersysteme, bei denen der Warmwasserspeicher durch erhöhte Entnahmemengen leergelaufen ist.

Bei einer bevorzugten Ausführungsform des erfindungsgemäßen Wasseraufbereitungssystems ist die Kavitationseinheit dem Warmwasserspeicher vorgeordnet. Der Warmwasserspeicher bildet somit mit der Entnahmeleitung, dem Vorlauf und dem Rücklauf einen Behandlungskreislauf, der die Kavitationseinheit umfasst. Auf diese Weise wird das im Behandlungskreislauf bzw. allgemein im Zirkulationskreislauf zirkulierende Warmwasser mehrfach der Kavitationseinheit zugeführt und die Reinigungswirkung somit erhöht. Indem die Kavitationseinheit dem Warmwasserspeicher vorgeordnet wird, wird sichergestellt, dass die gesamte Menge des in den Warmwasserspeicher eingetragenen Warmwassers zumindest einmalig kavitationsbehandelt wird.

Alternativ kann vorgesehen sein, dass der Zirkulationskreislauf eine Bypassleitung umfasst, die den Rücklauf mit dem Warmwasserspeicher fluidverbindet. Die Bypassleitung kann dem Warmwasserspeicher nachgeordnet sein. Das bedeutet, dass die Bypassleitung vom Zirkulationskreislauf an einer Stelle abzweigt, die dem Warmwasserspeicher nachgeordnet ist.

Die Kavitationseinheit kann in der Bypassleitung angeordnet sein. Die Anordnung der Kavitationseinheit in der Bypassleitung hat den Vorteil, dass lediglich ein Teil des Warmwassers kontinuierlich der Kavitationsbehandlung zugeführt wird, wodurch die Energieeffizienz des erfindungsgemäßen Wasseraufbereitungssystems gesteigert wird. Eine derartige Teilbehandlung des Warmwassers ist dabei ausreichend, da durch die Ultrafiltrationseinheit im Kaltwasserzulauf bereits die Anzahl an biologischen Verunreinigungen, insbesondere Legionellen, reduziert wird.

Vorzugsweise umfasst das erfindungsgemäße Wasseraufbereitungssystem eine Steuereinrichtung, die mit der Kavitationseinheit und/oder wenigstens einer Pumpe, insbesondere wenigstens einer durch einen Frequenzumrichter gesteuerten Pumpe, und/oder wenigstens einem Gassensor und/oder Drucksensor signalverbunden ist. Die Steuereinheit ermöglicht die Steuerung des Wasseraufbereitungssystems derart, dass die Durchlaufmenge, insbesondere durch die Kavitationseinheit, entsprechend den Messwerten der unterschiedlichen Sensoren, insbesondere des Gassensors und/oder eines Drucksensors, angepasst werden kann. Dazu ist die Steuereinrichtung vorteilhaft mit wenigstens einer Pumpe, vorzugsweise mit zwei durch einen Frequenzumrichter gesteuerten Pumpen, des Wasseraufbereitungssystems und wenigstens einem Sensor, insbesondere Gassensor und/oder Drucksensor, signalverbunden. Der Gassensor liefert insbesondere ein Ein- und Ausschaltsignal für eine Entgasung in der Kavitationseinheit, wobei mittels der Entgasung aus dem behandelten Warmwasser ausgasende Bestandteile abgeführt werden können. Hierdurch wird verhindert, dass dem Warmwasser zuviel Sauerstoff entzogen wird, wodurch sich das aerobe Milieu des Warmwassers in ein anaerobes Milieu verändern könnte.

Ferner kann das erfindungsgemäße Wasseraufbereitungssystem wenigstens einen Mikroblasenabscheider in Kombination mit einem Magnetventil umfassen, so dass in Abhängigkeit von den Messwerten des Gassensors durch die Steuereinheit das Magnetventil mit dem Mikroblasenabscheider steuerbar ist. Auf diese Weise kann der Sauerstoffgehalt im Warmwasser eingestellt werden. Insbesondere ist es möglich, durch den Mikroblasenabscheider den Sauerstoffgehalt derart zu reduzieren, dass ein Legionellenwachstum vermieden bzw. zumindest reduziert wird.

Das Wasseraufbereitungssystem kann eine Dosierungseinrichtung zum Zuführen eines Desinfektionsmittels, insbesondere eines Oxidationsmittels, vorzugsweise von Ozon, in den Zirkulationskreislauf umfassen. Auf diese Weise kann das Leitungssystem des Wasseraufbereitungssystems desinfiziert werden, ohne dass eine thermische Desinfektion, d.h. eine Aufheizung des Warmwassers bzw. des Leitungssystems, hierzu notwendig ist. Somit entfallen auch etwaige durch eine thermische Desinfektion verursachte notwendige Reparaturarbeiten an dem Wasseraufbereitungssystem. Zudem ist es, insbesondere in Sommern, den zentralen Wasserversorgern nicht möglich, jedem Nutzer jederzeit eine ausreichende Menge an Warmwasser zu Verfügung zu stellen, die für eine thermische Desinfektion des Wasseraufbereitungssystems nötig ist.

Somit ist ein weiterer Vorteil hiervon, dass eine Desinfektion des Wasseraufbereitungssystems jederzeit möglich ist.

Die Kavitationseinheit kann derart geometrisch ausgebildet sein, dass sie einen Unterdruckbereich zur Zuführung des Desinfektionsmittels aufweist. Auf diese Weise wird die Zuführung des Desinfektionsmittels vereinfacht. Zudem wird keine zusätzliche Pumpe zur Zuführung des Desinfektionsmittels benötigt.

In einer weiteren Ausführungsform ist ein Temperatursensor in dem Zirkulationskreislauf angeordnet. Hierdurch fungiert der Zirkulationskreislauf als zusätzlicher Speicher für das Warmwasser neben dem Warmwasserspeicher.

Mit dem beschriebenen Verfahren wird eine verbesserte Keimreduktion erreicht, indem eine doppelte Keimbarriere, nämlich durch die erste Reinigungsstufe (Ultrafiltration) und die zweite Reinigungsstufe (Kavitationsbehandlung), geschaffen wird. Die beiden Reinigungsstufen bilden somit gegenseitig eine Rückfallebene, so dass eine kontinuierliche Entkeimung des Wassers gewährleistet ist. Konkret bedeutet dies, dass beispielsweise bei Ausfall der zweiten Reinigungsstufe eine Keimreduktion in der ersten Reinigungsstufe erfolgt, so dass die Qualität des aufbereiteten Wassers ausreichend gegeben ist. Weitere Vorteile und Wirkungen sind im Zusammenhang mit dem Wasseraufbereitungssystem erläutert.

Bei einer bevorzugten Ausführungsform des Wasseraufbereitungsverfahrens wird das Warmwasser zumindest teilweise kontinuierlich der zweiten Reinigungsstufe zugeführt. Das Warmwasser wird der Kavitationsbehandlung also kontinuierlich bzw. mehrfach unterzogen, so dass ein Wachstum von biologischen Verunreinigungen, insbesondere ein Legionellenwachstum verhindert wird.

Ferner wird bei einer weiteren Ausführungsform dieses Verfahrens vorzugsweise ein Teil des Kaltwassers nach der ersten Reinigungsstufe abgezweigt und einer Entnahmestelle zugeführt. Auf diese Weise kann an der Entnahmestelle nicht nur Warmwasser, sondern auch Kaltwasser entnommen bzw. mit dem Warmwasser vermischt werden. Dabei besteht der besondere Vorteil des Verfahrens nach dieser Ausführungsform darin, dass der abgezweigte Teil des Kaltwassers, insbesondere das Kaltbrauchwasser, nach der ersten Reinigungsstufe, d.h. nach der Ultrafiltration und/oder Behandlung mit Ultraviolettlicht, abgezweigt wird. Das der Entnahmestelle direkt zugeleitete Kaltwasser wird also zunächst der ersten Reinigungsstufe, also der Ultrafiltration und/oder der Behandlung mit Ultraviolettlicht zugeführt, so dass auch das Kaltbrauchwasser bzw. abgezweigte Kaltwasser von biologischen Verunreinigungen, insbesondere Legionellen, weitgehend befreit wird.

Die Erfindung wird im Folgenden anhand von Ausführungsbeispielen unter Bezugnahme auf die beigefügten, schematischen Zeichnungen näher erläutert. Darin zeigen
- Fig. 1: ein Prozessschaltbild eines Wasseraufbereitungssystems ;
- Fig. 2: ein Prozessschaltbild eines erfindungsgemäßen Wasseraufbereitungssystem;
- Fig. 3: Wasseraufbereitungssystems
- Fig. 4: ein Prozessschaltbild eines erfindungsgemäßen Wasseraufbereitungssystem gemäß einem bevorzugten Ausführungsbeispiel.
- Fig. 5: Wasseraufbereitungssystems
- Fig. 6: ein Prozessschaltbild eines erfindungsgemäßen Wasseraufbereitungssystem gemäß einem weiteren bevorzugten Ausführungsbeispiel

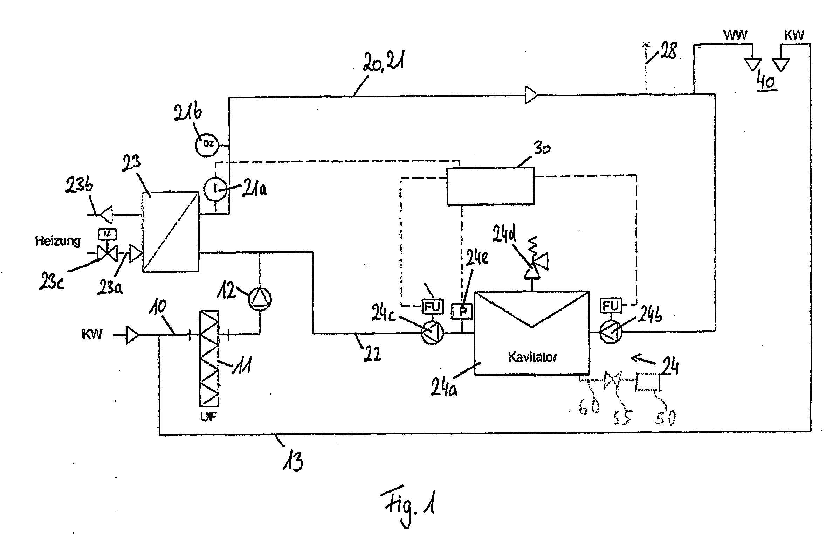

Das Wasseraufbereitungssystem gemäß Fig. 1 bis 6 umfasst jeweils einen Zirkulationskreislauf 20, der einen Erhitzer 23 und eine Kavitationseinheit 24 aufweist. Der Erhitzer 23 ist dabei als Wärmetauscher, insbesondere Plattenwärmetauscher, ausgeführt. Andere Arten von Erhitzern 23 sind möglich. Der als Wärmetauscher ausgeführte Erhitzer 23 umfasst ferner eine Wärmetauscherzuleitung 23a, in der ein Motorventil 23c angeordnet ist, wodurch der Zustrom der Wärmetauscherflüssigkeit regelbar ist. Ferner ist eine Wärmetauscherableitung 23b vorgesehen. Die Wärmetauscherzuleitung 23a und die Wärmetauscherableitung 23b sind durch den Wärmetauscher 23 mit dem Zirkulationskreislauf 20 thermisch gekoppelt. Dabei besteht vorzugsweise keine Fluidverbindung zwischen der Wärmetauscherzuleitung 23a bzw. Wärmetauscherableitung 23b und dem Zirkulationskreislauf 20.

Der Zirkulationskreislauf 20 umfasst ferner einen Vorlauf 21, der den Wärmetauscher bzw. den Erhitzer 23 mit einer Entnahmestelle 40 verbindet. Ferner ist die Entnahmestelle 40 mit dem Erhitzer 23 wiederum durch einen Rücklauf 22 des Zirkulationskreislaufs 20 gekoppelt. Gemäß Fig. 1 bis 4 ist im Rücklauf 22 des Zirkulationskreislaufs 20 die Kavitationseinheit 24 angeordnet.

Die Beispiele gemäß Fig. 1 bis 6 umfassen ferner einen Kaltwasserzulauf 10, der mit dem Zirkulationskreislauf 20 verbunden ist. Dabei ist der Kaltwasserzulauf 10 dem Erhitzer 23 in Strömungsrichtung vorgeordnet. Das bedeutet, dass der Kaltwasserzulauf 10 derart angeordnet ist, dass das Kaltwasser unmittelbar vor dem Erhitzer 23 in den Zirkulationskreislauf 20, insbesondere den Rücklauf 22, eingeleitet wird. Im Kaltwasserzulauf 10 ist eine Ultrafiltrationseinheit 11 angeordnet. Die Ultrafiltrationseinheit 11 umfasst einen Ultrafilter, der angepasst ist, biologische Verunreinigungen, insbesondere Bakterien und/oder Viren, besonders bevorzugt Legionellen, aus dem Kaltwasser zu filtern. Der Ultrafilter kann dabei eine Filterstruktur aufweisen, die eine Filtration von Partikeln ermöglicht, die höchstens 0,05 µm, insbesondere höchstens 0,04 µm, insbesondere höchstens 0,035 µm, insbesondere 0,03 µm, beträgt.

Vorzugsweise kann bei jeder der Ausführungsformen eine Ultraviolettlichtbehandlungseinheit direkt vor oder direkt nach der Ultrafiltrationseinheit 11 angeordnet sein.

Die Ultraviolettlichtbehandlungseinheit umfasst vorzugsweise einen Ultraviolettstrahler. Der Ultraviolettstrahler bestrahlt das Wasser beim Durchlaufen der Ultraviolettlichtbehandlungseinheit mit ultraviolettem Licht (UV-Licht). Die Intensität des ultravioletten Lichts in der Ultraviolettlichtbehandlungseinheit wird vorzugsweise derart angepasst, dass im Wesentlichen alle Viren und Bakterien, insbesondere Legionellen, bei einmaligem Durchlauf durch die Ultraviolettlichtbehandlungseinheit abgetötet werden.

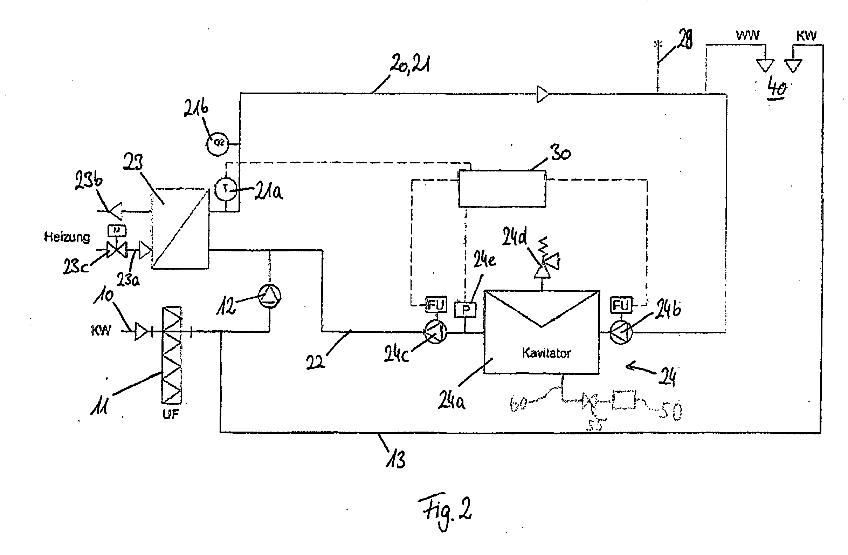

Das Beispiel gemäß Fig. 1 und 2 betrifft ein Wasseraufbereitungssystem, das als Durchlaufsystem ausgebildet ist. Das bedeutet, dass der Erhitzer 23 bzw. Wärmetauscher, insbesondere Plattenwärmetauscher, im Wesentlichen einen Durchlauferhitzer bildet. Eine Vorrichtung zur Warmwasserspeicherung ist gemäß Fig. 1 und 2 nicht vorgesehen. Die an der Entnahmestelle 40 entnommene Warmwassermenge wird also zweckmäßigerweise zu gleichen Teilen über den Kaltwasserzulauf 10 in den Zirkulationskreislauf 20 nachgeführt. Bei Entnahme von Warmwasser an der Entnahmestelle 40 wird also ein Teil des Kaltwassers, das über den Kaltwasserzulauf 10 vor dem Erhitzer 23 in den Zirkulationskreislauf 20, insbesondere den Rücklauf 22 geleitet wird, direkt über die Entnahmestelle 40 abgeführt, ohne eine Kavitationsbehandlung in der Kavitationseinheit 24 zu erfahren. Durch die im Kaltwasserzulauf 10 angeordnete Ultrafiltrationseinheit 11 wird jedoch ein Eintrag von biologischen Verunreinigungen, insbesondere eine Legionellenbelastung, vermieden. Wenn die Entnahmestelle 40 geschlossen ist, zirkuliert das Warmwasser im Zirkulationskreislauf 20 und wird kontinuierlich der Kavitationseinheit 24 zugeführt.

In den Fig. 1 und 2 ist die Kavitationseinheit 24 im Detail dargestellt. Dabei ist zu erkennen, dass die Kavitationseinheit 24 einen Kavitator 24a umfasst, dem eine erste Kavitatorpumpe 24b vorgeordnet ist. Eine zweite Kavitatorpumpe 24c ist dem Kavitator 24a nachgeordnet. Zwischen dem Kavitator 24a und der zweiten Kavitatorpumpe 24c ist ferner ein Drucksensor 24e angeordnet. Die erste Kavitatorpumpe 24b, die zweite Kavitatorpumpe 24c und der Drucksensor 24e sind mit einer Steuereinheit 30 signalverbunden. Die Steuereinheit 30 umfasst ferner eine Signalkopplung zu einem Vorlauftemperatursensor 21a, der im Vorlauf 21 des Zirkulationskreislaufs 20 angeordnet ist. Anhand der Messdaten des Vorlauftemperatursensors 21a und des Drucksensors 24e steuert die Steuereinheit 30 die erste Kavitatorpumpe 24b und/oder die zweite Kavitatorpumpe 24c, so dass bei hoher Energieeffizienz gleichzeitig eine sichere Entkeimung in der Kavitationseinheit 24 ermöglicht wird. Die Kavitationseinheit 24 umfasst ferner eine Entgasung 24d, über die aus dem behandelten Warmwasser ausgasende Bestandteile abgeführt werden können.

Die Kavitatorpumpen (24b, 24c) und auch die anderen Pumpen des Wasseraufbereitungssystem können jeweils mittels eines Frequenzumrichter gesteuerte Pumpen (sogenannte FU-Pumpen) sein. Mittels des Frequenzumrichters wird jeweils die Frequenz des Versorgungsstroms auf die gewünschte Frequenz der Pumpe angepasst.

Der Durchfluss durch die Kavitationseinheit 24 wird durch zwei mittels Frequenzumrichter gesteuerte Pumpen (24b, 24c) angepasst. Die Steuereinheit 30 regelt die Pumpen und somit den Durchflusses durch die Kavitationseinheit 24 entsprechend den in den Pumpen (24b, 24c) integrierten Drucksensoren. Die Drucksensoren können zudem den Betriebszustand und etwaige Störungen der Pumpen (24b, 24c) der Steuereinheit 30 übermitteln, die eine entsprechende Warnung bzw. einen entsprechenden Alarm an den Anwender des Wasseraufbereitungssystems geben kann. Die Sensoren können darüber hinaus als kombinierte Temperatur-/Drucksensoren ausgebildet sein, wodurch zusätzlich die Betriebstemperatur gemessen bzw. durch die Steuereinrichtung 30 überwacht werden kann.

Eine Dosierungseinrichtung 50 führt dem Wasserkreislauf 20 bedarfsweise ein Desinfektionsmittels über eine Zufuhrleitung 60 zu. Das Desinfektionsmittel kann insbesondere ein Oxidationsmittel, beispielsweise Ozon, sein. Die Dosierungseinrichtung 50 führt das Desinfektionsmittel der Kavitationseinheit 24 zu. Andere Stellen, an denen das Desinfektionsmittel in den Zirkulationskreislauf 20 geführt wird, sind vorstellbar. Die Kavitationseinheit 24 weist einen Bereich auf, in dem durch die geometrische Bauform der Kavitationseinheit 24 automatisch Unterdruck erzeugt wird. Vorteilhafterweise wird das Desinfektionsmittel von der Dosierungseinrichtung 50 diesem Bereich der Kavitationseinheit 24 zugeführt. Somit kann auf eine Pumpe zum Zuführen des Desinfektionsmittels verzichtet werden. Durch Einleiten des Desinfektionsmittels in den Zirkulationskreislauf 20 kann das Leitungssystem des Wasseraufbereitungssystems desinfiziert werden, ohne dass eine thermische Desinfektion, d.h. eine Aufheizung des Warmwassers bzw. des Leitungssystems, hierzu notwendig ist. Somit entfallen auch etwaige durch eine thermische Desinfektion verursachte notwendige Reparaturarbeiten an dem Wasseraufbereitungssystem.

Bei dem Beispiel gemäß Fig. 1 ist vorgesehen, dass die Ultrafiltrationseinheit 11 im Kaltwasserzulauf 10 einer Trinkwasserabzweigung 13 nachgeordnet ist. Der Ultrafiltrationseinheit 11 ist ferner im Kaltwasserzulauf 10 eine Kaltwasserpumpe 12 nachgeordnet.

Die Trinkwasserabzweigung 13 führt einen Teilstrom des Kaltwassers aus dem Kaltwasserzulauf 10 zur Entnahmestelle 40. Bei dem Ausführungsbeispiel gemäß Fig. 1 wird also der Anteil des Kaltwassers der Ultrafiltrationseinheit 11 zugeführt, der für die Warmwasserbereitung im Zirkulationskreislauf 20, insbesondere im Erhitzer 23, vorgesehen ist. Der direkt für die Entnahme an der Entnahmestelle 40 vorgesehene Kaltwasseranteil wird unter Umgehung der Ultrafiltrationseinheit 11 über die Trinkwasserabzweigung 13 direkt der Entnahmestelle 40 zugeführt.

Das Ausführungsbeispiel des erfindungsgemäßen Wasseraufbereitungssystems gemäß Fig. 2 entspricht im Wesentlichen dem Beispiel gemäß Fig. 1 mit dem Unterschied, dass die Ultrafiltrationseinheit 11 im Kaltwasserzulauf 10 der Trinkwasserabzweigung 13 vorgeordnet ist. Bei dem Ausführungsbeispiel gemäß Fig. 2 wird also das gesamte Kaltwasser im Kaltwasserzulauf 10 ultrafiltriert und anschließend aufgeteilt, wobei ein erster Kaltwasseranteil dem Zirkulationskreislauf 20 zur Warmwasserbereitung zugeführt und ein zweiter Kaltwasseranteil über die Trinkwasserabzweigung 13 der Entnahmestelle 40 zugeführt wird. Die Kaltwasserpumpe 12 des Kaltwasserzulaufs 10 ist dabei der Trinkwasserabzweigung 13 nachgeordnet. Bei diesem Ausführungsbeispiel wird also auch das direkt der Entnahmestelle 40 zugeführte Kaltwasser zunächst einer Ultrafiltration unterzogen.

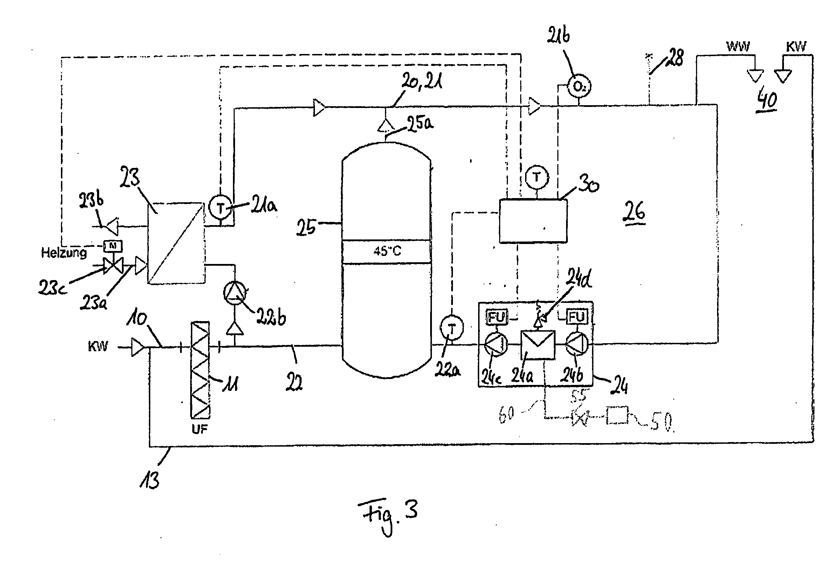

Das Beispiel gemäß Fig. 3 betrifft ein Wasseraufbereitungssystem, das als Speichersystem ausgeführt ist. Das bedeutet, dass das Wasseraufbereitungssystem gemäß Fig. 3 einen Warmwasserspeicher 25 umfasst. Der Warmwasserspeicher 25 dient dabei als Puffer, so dass ausreichend Warmwasser bereitsteht, selbst wenn die Menge des an der Entnahmestelle 40 entnommenen Warmwassers die Menge des nachgeführten Kaltwassers übersteigt. Generell ähnelt der Aufbau des Wasseraufbereitungssystems gemäß Fig. 3 dem Ausführungsbeispiel gemäß Fig. 1, wobei im Rücklauf 22 zwischen der Kavitationseinheit 24 und dem Kaltwasserzulauf 10 der Warmwasserspeicher 25 angeordnet ist. Der Warmwasserspeicher 25 ist durch eine Entnahmeleitung 25a mit dem Vorlauf 21 des Zirkulationskreislaufs 20 gekoppelt. Die Kavitationseinheit 24 ist in Fig. 3 vereinfacht dargestellt und entspricht im Wesentlichen dem im Zusammenhang mit dem Beispiel gemäß Fig. 1 beschriebenen Aufbau.

Der Warmwasserspeicher 25 bildet mit der Entnahmeleitung 25a, dem Vorlauf 21 und dem Rücklauf 22 einen Behandlungskreislauf 26, der die Kavitationseinheit 24 umfasst. Der Behandlungskreislauf 26 ist Bestandteil des Zirkulationskreislaufs 20 und im Wesentlichen als zusätzlicher, untergeordneter Zirkulationskreislauf ausgebildet. Das bedeutet, dass die Kavitatorpumpen 24b, 24c das Warmwasser kontinuierlich zwischen dem Warmwasserspeicher 25 und der Kavitationseinheit 24 umwälzen, so dass eine im Wesentlichen durchgehende Kavitationsbehandlung des Warmwassers erfolgt. Das Wasseraufbereitungssystem gemäß Fig. 3 umfasst ferner eine Steuereinheit 30, die mit der Kavitationseinheit 24, insbesondere den Kavitatorpumpen 24b, 24c, einem Rücklauftemperatursensor 22a dem Vorlauftemperatursensor 21a, dem Motorventil 23c sowie einem Sauerstoffsensor 21b signalverbunden ist. Der Rücklauftemperatursensor 22a ist dabei zwischen der Kavitationseinheit 24 und dem Warmwasserspeicher 25 im Rücklauf 22 des Zirkulationskreislaufs 20 angeordnet. Der Sauerstoffsensor 21b ist im Vorlauf 21 des Zirkulationskreislaufs 20 zwischen der Entnahmeleitung 25a und der Entnahmestelle 40 angeordnet. Durch die Anordnung des Temperatursensors 22a in dem Zirkulationskreislauf 20 dient das Leitungssystem des Wasseraufbereitungssystems als zusätzlicher Speicher für das Warmwasser neben dem Warmwasserspeicher 25.

Der Kaltwasserzulauf 10 mündet zwischen dem Warmwasserspeicher 25 und dem Erhitzer 23 in den Zirkulationskreislauf 20. Dabei ist der Einmündung des Kaltwasserzulaufs 10 die Ultrafiltrationseinheit 11 vorgeschaltet. Die Ultrafiltrationseinheit 11 ist also im Kaltwasserzulauf 10 angeordnet, wobei die Trinkwasserabzweigung 13 gemäß Fig. 3 der Ultrafiltrationseinheit 11 vorgeordnet ist. Im Unterschied zu den Beispielen gemäß Fig. 1 und 2 weist der Kaltwasserzulauf 10 gemäß Fig. 3 keine Kaltwasserpumpe 12 auf. Vielmehr ist die Kaltwasserpumpe 12 bei dem Ausführungsbeispiel gemäß Fig. 3 im Rücklauf 22 platziert und wird als erste Rücklaufpumpe 22b bezeichnet. Die erste Rücklaufpumpe 22b ist also zwischen dem Kaltwasserzulauf 10 und dem Erhitzer 23 im Zirkulationskreislauf 20 angeordnet.

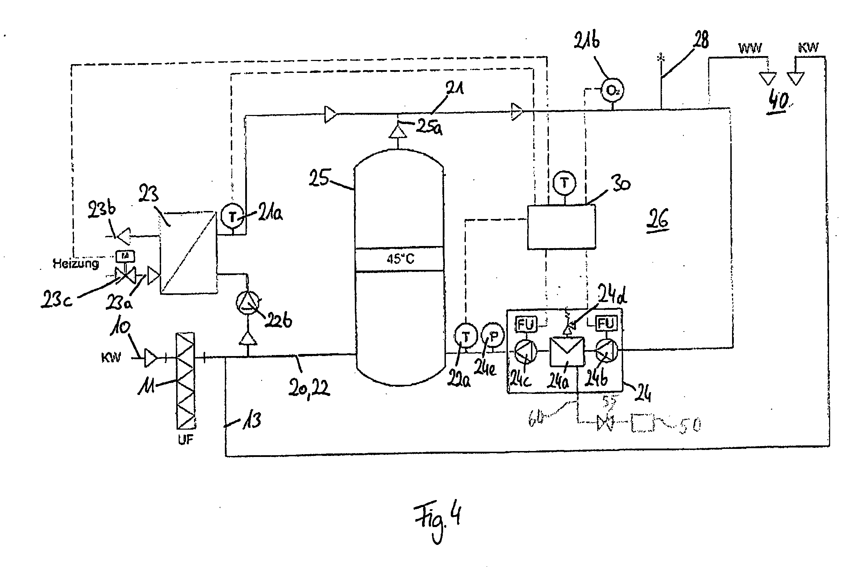

Das Ausführungsbeispiel des erfindungsgemäßen Wasseraubereitungssystems gemäß Fig. 4 ist im Wesentlichen analog zu dem Beispiel gemäß Fig. 3 aufgebaut, wobei die Ultrafiltrationseinheit 11 im Kaltwasserzulauf 10 jedoch der Trinkwasserabzweigung 13 vorgeordnet ist. Ferner ist gemäß Fig. 4 im Rücklauf 22 zwischen der Kavitationseinheit 24 und dem Rücklauftemperatursensor 22a der Drucksensor 24e dargestellt.

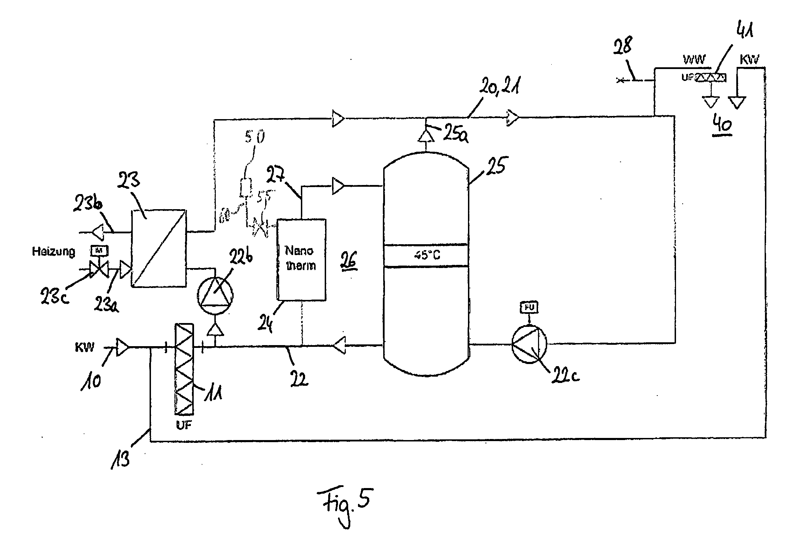

Fig. 5 zeigt ein weiteres Beispiel eines Wasseraufbereitungssystems, wobei die Kavitationseinheit 24 weiter vereinfacht dargestellt ist. Im Wesentlichen umfasst die Kavitationseinheit 24 dieselben Komponenten, wie auch im Zusammenhang mit den Fig. 1 bis 4 beschrieben.

Das Wasseraufbereitungssystem gemäß Fig. 5 ist als Speichersystem ausgebildet. Der Warmwasserspeicher 25 ist dabei analog zu den Fig. 3 und 4 im Rücklauf 22 angeordnet und verbindet den Rücklauf 22 mit dem Vorlauf 21 über die Entnahmeleitung 25a. Im Unterschied zu den vorgenannten Beispielen weist der Zirkulationskreislauf 20 gemäß Fig. 5 einen Bypasskreislauf 27 auf, der in Strömungsrichtung nach dem Warmwasserspeicher 25 vom Rücklauf 22 abzweigt und zurück zum Warmwasserspeicher 25 führt. Die Kavitationseinheit 24 ist dabei in der Bypassleitung 27 angeordnet. Gemäß Fig. 5 bildet also die Bypassleitung 27 mit dem Warmwasserspeicher 25 und dem Rücklauf 22 den Behandlungskreislauf 26. Im Behandlungskreislauf 26 wird das Warmwasser durch die Kavitatorpumpen 24b, 24c (in Fig. 5 nicht dargestellt) kontinuierlich umgewälzt, so dass eine durchgehende Reinigung des Warmwassers aus dem Warmwasserspeicher 25 erfolgt.

Der Zirkulationskreislauf 20 gemäß Fig. 5 umfasst ferner eine erste Rücklaufpumpe 22b, die zwischen der Bypassleitung 27 und dem Erhitzer 23 im Rücklauf 22 des Zirkulationskreislaufs 20 angeordnet ist. Konkret ist die erste Rücklaufpumpe 22b zwischen dem Kaltwasserzulauf 10 und dem Erhitzer 23 im Zirkulationskreislauf 20 angeordnet. Ferner ist eine zweite Rücklaufpumpe 22c vorgesehen, die zwischen der Entnahmestelle 40 und dem Warmwasserspeicher 25 im Zirkulationskreislauf 20 angeordnet ist.

Die Ultrafiltrationseinheit 11 ist analog zu den Beispielen gemäß Fig. 1 bis 4 im Kaltwasserzulauf 10 angeordnet. Insbesondere ist die Ultrafiltrationseinheit 11 zwischen der Trinkwasserabzweigung 13 und dem Zirkulationskreislauf 20 im Kaltwasserzulauf 10 angeordnet. Bei dem Beispiel gemäß Fig. 5 wird also der Kaltwasseranteil ultrafiltriert, der für die Warmwasserbereitung vorgesehen ist.

Ferner umfasst die Entnahmestelle 40 einen Warmwasserultrafilter 41. Das über die Entnahmestelle 40 entnommene Warmwasser wird also kurz vor der Entnahme nochmals ultrafiltriert.

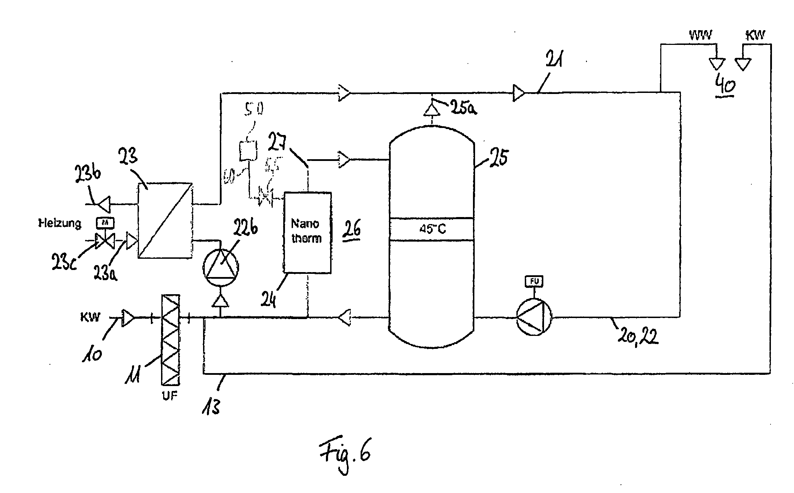

Das Wasseraufbereitungssystem gemäß dem Ausführungsbeispiel nach Fig. 6 ist im Wesentlichen analog zu dem Beispiel gemäß Fig. 5 aufgebaut, wobei die Trinkwasserabzweigung 13 dem Ultrafilter 11 im Kaltwasserzulauf 10 nachgeordnet ist. Bei dem Ausführungsbeispiel gemäß Fig. 6 wird also das gesamte Kaltwasser vor der Weiterleitung an den Zirkulationskreislauf 20 bzw. die Entnahmestelle 40 ultrafiltriert. Das gefilterte Kaltwasser wird also nach der Ultrafiltrationseinheit 11 zum einen Teil über die Trinkwasserabzweigung 13 direkt der Entnahmestelle 40 als Kaltwasser zugeführt und zum anderen Teil dem Zirkulationskreislauf 20 zugeleitet, worin das Kaltwasser zur Erzeugung von Warmwasser verwendet und anschließend als Warmwasser der Entnahmestelle 40 zugeführt wird.

Insgesamt wird ein kombiniertes Verfahren offenbart, bei dem lokale thermische Desinfektion, beispielsweise durch Warmwasserspeicher 25 und Kavitationseinheit 24, mit der Ultrafiltration vorteilhaft gekoppelt wird. Durch das erfindungsgemäße System wird eine doppelte Barriere aufgebaut, die verhindert, dass bei besonderen Betriebsumständen ein Neueintrag von Bakterien und Viren erfolgt. Derartige bestimmte Betriebsvorfälle können beispielsweise ein Überfahren des Warmwasserspeichers 25 durch unzureichende Dimensionierung umfassen. Das bedeutet, dass in diesem Falle die Entnahme bzw. Wassererwärmung direkt über den Wärmetauscher bzw. Erhitzer 23, vorbei am Warmwasserspeicher 25, also direkt ins Abnahmenetz, erfolgt. Das erfindungsgemäße System ermöglicht einen Kaltwassereintragsschutz und einen Schutz über den Behandlungskreislauf 26 bei beispielsweise vorhandenen Auskeimungen aus Totleitungen 28. Derartige Totleitungen 28 können, wie beispielsweise in den Fig. 1 bis 4 dargestellt, mit dem Vorlauf 21 bzw. allgemein dem Zirkulationskreislauf 20 gekoppelt sein. Durch das kontinuierliche Umwälzen des Warmwassers im Behandlungskreislauf 26, konkret durch die Kavitationseinheit 24, wird die Verunreinigung von Totleitungen 28 bzw. das Keimwachstum in Totleitungen 28 verhindert bzw. vermieden.

### Bezugszeichenliste

- 10: Kaltwasserzulauf
- 11: Ultrafiltrationseinheit
- 12: Kaltwasserpumpe
- 13: Trinkwasserabzweigung
- 20: Zirkulationskreislauf
- 21: Vorlauf
- 21a: Vorlauftemperatursensor
- 21b: Sauerstoffsensor
- 22: Rücklauf
- 22a: Rücklauftemperatursensor
- 22b: erste Rücklaufpumpe
- 22c: zweite Rücklaufpumpe
- 23: Erhitzer
- 23a: Wärmetauscherzuleitung
- 23b: Wärmetauscherableitung
- 23c: Motorventil
- 24: Kavitationseinheit
- 24a: Kavitator
- 24b: erste Kavitatorpumpe
- 24c: zweite Kavitatorpumpe
- 24d: Entgasung
- 24e: Drucksensor
- 25: Warmwasserspeicher
- 25a: Entnahmeleitung
- 26: Behandlungskreislauf
- 27: Bypassleitung
- 28: Totleitung
- 30: Steuereinheit
- 40: Entnahmestelle
- 41: Warmwasserultrafilter
- 50: Desinfektionsmitteldosierungseinrichtung
- 55: Dosierungsventil
- 60: Desinfektionsmittetzufuhrleitung

## Patentansprüche

1. Wasseraufbereitungssystem mit einem Kaltwasserzulauf (10), der in einen Zirkulationskreislauf (20) mündet, wobei der Zirkulationskreislauf (20) wenigstens einen Erhitzer (23), wenigstens eine Kavitationseinheit (24), einen Vorlauf (21), der vom Erhitzer (23) zu einer Entnahmestelle (40) führt, und einen Rücklauf (22), der von der Entnahmestelle (40) zum Erhitzer (23) führt, umfasst, wobei der Kaltwasserzulauf (10) dem Erhitzer (23) in Strömungsrichtung vorgeordnet ist und wenigstens eine Ultrafiltrationseinheit (11) aufweist sodass das gesamte Kaltwasser in der Ultrafiltrationseinheit filtriert wird, wobei der Kaltwasserzulauf (10) eine Trinkwasserabzweigung (13) umfasst, die den Kaltwasserzulauf (10) mit der Entnahmestelle (40) fluidverbindet sodass das in die Trinkwasserabzweigung (13) abgeleitete Kaltwasser direkt zur Entnahmestelle geleitet wird, und die Trinkwasserabzweigung (13) der Ultrafiltrationseinheit (11) nachgeordnet ist.

2. Wasseraufbereitungssystem nach Anspruch 1, **dadurch gekennzeichnet, dass** der Zirkulationskreislauf (20) wenigstens einen Warmwasserspeicher (25) umfasst, der mit dem Rücklauf (22) fluidverbunden ist.

3. Wasseraufbereitungssystem nach Anspruch 2, **dadurch gekennzeichnet, dass** der Warmwasserspeicher (25) eine Entnahmeleitung (25a) umfasst, die mit dem Vorlauf (21) fluidverbunden ist.

4. Wasseraufbereitungssystem nach Anspruch 2 oder 3, **dadurch gekennzeichnet, dass** die Kavitationseinheit (24) dem Warmwasserspeicher (25) vorgeordnet ist.

5. Wasseraufbereitungssystem nach wenigstens einem der Ansprüche 2 bis 4, **dadurch gekennzeichnet, dass** der zirkulationskreislauf (20) eine Bypassleitung (27) umfasst, die den Rücklauf (22) mit dem Warmwasserspeicher (25) fluidverbindet.

6. Wasseraufbereitungssystem nach wenigstens einem der Ansprüche 1 bis 5, **gekennzeichnet durch** eine Steuereinrichtung (30), die mit der Kavitationseinheit (24) und/oder wenigstens einer Pumpe (12, 22b, 22c, 24b, 24c) und/oder wenigstens einem Gassensor (21b) signalverbunden ist.

## Claims

1. A water treatment system including a cold water supply (10) opening into a circulating cycle (20), said circulating cycle (20) comprising at least one heater (23), at least one cavitation unit (24), a flow pipe (21) leading from the heater (23) to a tapping point (40), and a return pipe (22) leading from the tapping point (40) to the heater (23), wherein the cold water supply (10) precedes the heater (23) in the flow direction and comprises at least one Ultrafiltration unit (11) such that all the cold water is filtered in the ultrafiltration unit, wherein the cold water supply (10) comprises a drinking water branch pipe (13) fluidly connecting the cold water supply (10) to the tapping point (40) such that the cold water diverted into the drinking water branch pipe (13) is directly conducted to the tapping point, and the drinking water branch pipe (13) is arranged consecutively to the ultrafiltration unit (11).

2. A water treatment system according to claim 1, **characterized in that** the circulating cycle (20) comprises at least one hot water reservoir (25) in fluid connection with the return pipe (22).

3. A water treatment system according to claim 2, **characterized in that** the hot water reservoir (25) comprises a tapping pipe (25a) in fluid connection with the flow pipe (21).

4. A water treatment system according to claim 2 or 3, **characterized in that** the cavitation unit (24) precedes the hot water reservoir (25).

5. A water treatment system according to at least one of claims 2 to 4, **characterized in that** the circulating cycle (20) comprises a bypass pipe (27) fluidly connecting the return pipe (22) to the hot water reservoir (25).

6. A water treatment system according to at least one of claims 1 to 5, **characterized by** a control device (30) that is signal-connected to the cavitation unit (24) and/or at least one pump (12, 22b, 22c, 24b, 24c) and/or at least one gas sensor (21b).

## Revendications

1. Système de traitement de l'eau, comportant une admission d'eau froide (10) qui débouche dans un circuit de circulation (20), ledit circuit de circulation (20) comportant au moins un réchauffeur (23), au moins une unité de cavitation (24), une conduite d'entrée (21), qui mène du réchauffeur (23) vers un point de soutirage (40), et une conduite de retour (22), qui mène du point de soutirage (40) vers le réchauffeur (23), l'admission d'eau froide (10) étant montée en amont du réchauffeur (23) par référence au sens de circulation et comporte au moins une unité d'ultrafiltration (11), de telle sorte que la totalité de l'eau froide est filtrée dans l'unité d'ultrafiltration (11), l'admission d'eau froide (10) comporte un embranchement d'eau potable (13) qui réalise la liaison fluidique entre l'admission d'eau froide (10) et le point de soutirage (40), de telle sorte que l'eau froide déviée dans l'embranchement d'eau potable (13) est guidée directement vers le point de soutirage, et l'embranchement d'eau potable (13) est monté en aval de l'unité d'ultrafiltration (11).

2. Système de traitement de l'eau selon la revendication 1, **caractérisé en ce que** le circuit de circulation (20) comporte au moins un réservoir d'eau chaude (25) qui est en liaison fluidique avec la conduite de retour (22).

3. Système de traitement de l'eau selon la revendication 2, **caractérisé en ce que** le réservoir d'eau chaude (25) comporte une conduite de soutirage (25a) qui est en liaison fluidique avec la conduite d'entrée (21).

4. Système de traitement de l'eau selon la revendication 2 ou 3, **caractérisé en ce que** l'unité de cavitation (24) est montée en amont du réservoir d'eau chaude (25).

5. Système de traitement de l'eau selon au moins l'une des revendications 2 à 4, **caractérisé en ce que** le circuit de circulation (20) comporte un by-pass (27) qui réalise la liaison fluidique entre la conduite de retour (22) et le réservoir d'eau chaude (25).

6. Système de traitement de l'eau selon au moins l'une des revendications 1 à 5, **caractérisé par** une unité de commande (30) qui est reliée par signaux à l'unité de cavitation (24) et/ou à au moins une pompe (12, 22b, 22c, 24b, 24c) et/ou à au moins un capteur de gaz (21b).
